# EUROPEAN PATENT SPECIFICATION

(11) **EP 4 502 413 B1**
(45) Date of publication and mention of the grant of the patent: **11.11.2026**
(21) Application number: 23779420.1
(22) Date of filing: 10.03.2023
(51) Int. Cl.: F16D 65/22, F16D 121/24, B60T 13/74

(54) **ELECTRIC BRAKE DEVICE**
ELEKTRISCHE BREMSVORRICHTUNG
DISPOSITIF DE FREIN ÉLECTRIQUE

(30) Priority: 30.03.2022 JP 2022056883
(43) Date of publication of application: 05.02.2025
(73) Proprietor: Astemo, Ltd., Tokyo 100-0004 (JP)
(72) Inventor: USUI, Koji, Hitachinaka-shi, Ibaraki 312-8503 (JP)
(74) Representative: Hoffmann Eitle
(86) International application number: PCT/JP2023/009212
(87) International publication number: WO 2023/189396

(56) References cited:
- EP-B1- 3 470 279
- FR-A1- 3 016 013
- JP-A- 2014 504 711
- JP-A- 2019 006 223
- JP-A- 2021 055 777
- JP-B2- 6 603 769
- US-A1- 2015 308 529
- US-A1- 2021 396 289

## Description

### TECHNICAL FIELD

The present invention relates mainly to an electric brake apparatus for an automobile, and, in particular, to improvement of an electric brake apparatus including a bracket member fixed to a support member of a brake mechanism and an electric actuator joined to this bracket member and operable to actuate the above-described brake mechanism.

### BACKGROUND ART

There are known this type of electric brake apparatuses using a bayonet structure to join an electric actuator to a bracket member fixed to a backplate that serves as a support member of a drum brake mechanism (refer to PTL 1).

### CITATION LIST

### PATENT LITERATURE

PTL 1: US2020/ 0378460A1
US 2015/308529 A1 discloses features falling under the preamble of claim 1. FR 3 016 013 A1, US 2021/396289 A1, and EP 3 470 279 B1 are further prior art.

### SUMMARY OF INVENTION

### TECHNICAL PROBLEM

Then, the electric actuator is joined to the bracket member using the bayonet structure in the following manner. The electric actuator is advanced relative to the bracket member in the axial direction of an output spindle thereof, and then rotated around the output spindle, thereby causing engagement portions provided on both of them to be engaged with each other. With these operations, the joining work is completed. In this manner, the above-described joining work requires the application of operations on the electric actuator in two directions, i.e., linear and rotational directions, and the assemblability thereof cannot be said to be excellent.

The present invention has been contrived in consideration of these circumstances, and an object thereof is to provide an excellently assemblable electric brake apparatus configured to allow an electric actuator to be joined to a bracket member with a single operation.

### SOLUTION TO PROBLEM

The invention is defined by claim 1.

To achieve the above-described object, a first feature of the present invention relates to an electric brake apparatus. The electric brake apparatus includes a bracket member fixed to a support member of a brake mechanism, and an electric actuator joined to the bracket member and operable to actuate the brake mechanism. The electric actuator includes a motor portion. The electric actuator is engaged with the bracket member by inserting the electric actuator into the bracket member along an axial direction of the motor portion. The motor portion corresponds to a motor case portion 12a in an embodiment of the present invention that will be described below.

Further, according to the present invention, a holding unit configured to hold the motor portion is provided to the bracket member.

Further, according to a third feature of the present invention, in addition to the second feature, the holding unit is disposed on a distal end side of the motor portion.

Furthermore, according to the present invention, the holding unit has a rail structure.

Furthermore, according to a fifth feature of the present invention, in addition to any of the first to fourth features, an elastic engagement unit is provided between the bracket member and the electric actuator. The elastic engagement unit includes a protruding engagement portion provided on one of the bracket member and the electric actuator and a recessed engagement portion provided on the other of the bracket member and the electric actuator, and first and second engagement portions are engaged with each other with the aid of elastic deformation of one of the first and second engagement portions.

Furthermore, according to the present invention, the electric actuator includes an output spindle portion arranged in such a manner that axes of the motor portion and the output spindle portion extend in parallel with each other, and the output spindle portion is engaged with a holding tube by fitting the output spindle portion to the holding tube provided to the bracket member. The output spindle portion corresponds to an output case portion 12b in the embodiment of the present invention that will be described below.

Furthermore, according to a seventh feature of the present invention, in addition to the sixth feature, the holding tube includes a press-fit portion to which the output spindle portion is press-fitted.

Furthermore, according to an eighth feature of the present invention, in addition to any of the first to seventh features, the bracket member is made from synthetic resin, and a containing tube configured to contain the motor portion is molded integrally with the bracket member.

According to the first feature of the present invention, the electric actuator can be joined to the bracket member with a single operation of inserting the electric actuator into the bracket member in the axial direction of the motor portion included in the electric actuator, and therefore the assemblability can be improved.

According to the second feature of the present invention, the motor portion is held on the bracket member by the holding unit, and therefore a rotation of the electric actuator can be restricted and a swinging motion of the motor portion can also be suppressed when the vehicle vibrates.

According to the third feature of the present invention, the holding unit is disposed at the distal end side away from a base portion of the motor portion, and therefore the swinging motion of the motor case portion can be further effectively suppressed.

According to the fourth feature of the present invention, the holding unit has a rail structure, and therefore a movement of the motor portion in a rotational direction can be restricted and a vibration received from a vehicle body can also be suppressed.

According to the fifth feature of the present invention, the elastic engagement unit can be simply configured.

According to the sixth feature of the present invention, both the holding of the output spindle portion by the holding tube and the joining between the output spindle portion and the holding tube can be achieved at the same time.

According to the seventh feature of the present invention, the holding tube includes the press-fit portion to which the output spindle portion is press-fitted, and therefore the joining strength between the output spindle portion and the holding tube can be enhanced.

According to the eighth feature of the present invention, the bracket member can be reduced in weight by being made from synthetic resin and also can be reinforced with the aid of the containing tube for containing the motor portion that is integrally molded with the bracket member, and, further, the electric actuator can be robustly supported by the bracket member made from synthetic resin.

### BRIEF DESCRIPTION OF DRAWINGS

Fig. 1 is a back view of a drum brake apparatus according to the present invention.
Fig. 2 is a side view of Fig. 1.
Fig. 3 is a partial perspective back view of the same drum brake apparatus.
Fig. 4 is a side view of Fig. 3.
Fig. 5 illustrates a bracket member as viewed from arrows 5-5 illustrated in Fig. 4 (a plan view of the bracket member).
Fig. 6 is a cross-sectional view taken along a line 6-6 illustrated in Fig. 5.
Fig. 7 is a perspective view of the bracket member.
Fig. 8 is an enlarged view of a portion indicated by an arrow 8 illustrated in Fig. 4.

### DESCRIPTION OF EMBODIMENTS

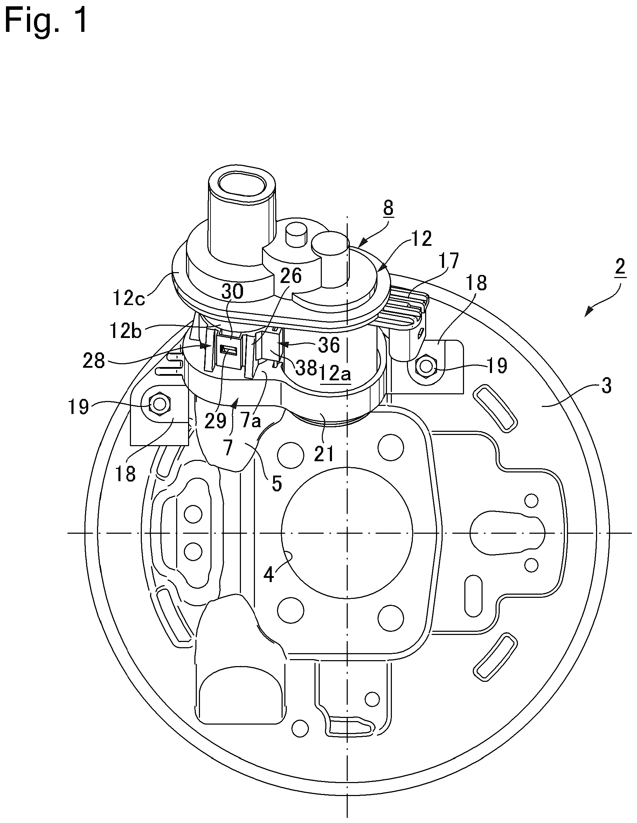

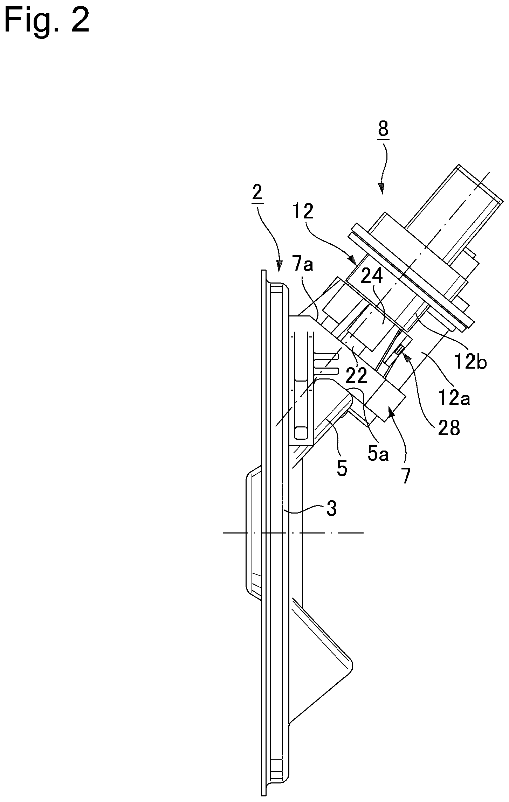

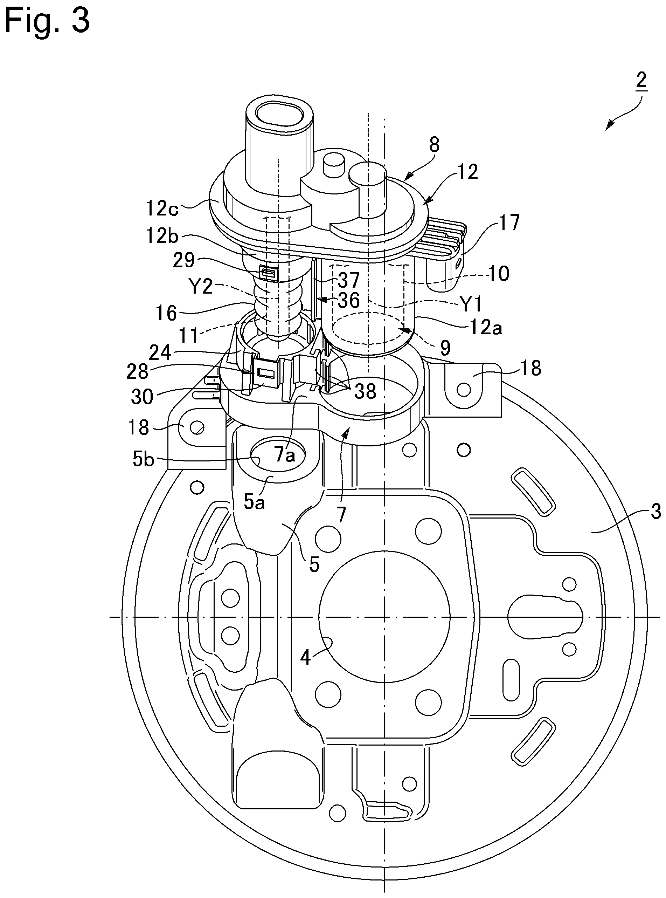

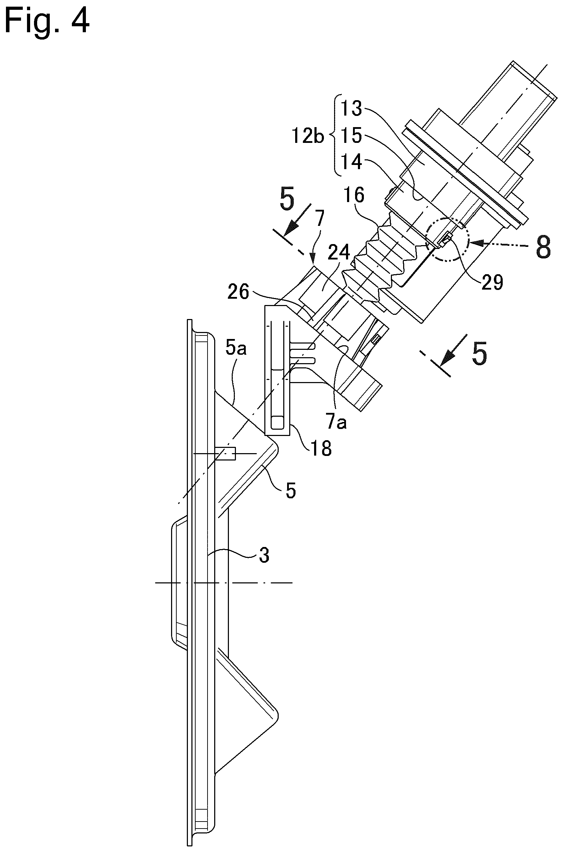

An embodiment of the present invention will be described with reference to accompanying Figs. 1 to 8.

First, in Figs. 1 to 3, a reference numeral 2 indicates an electric parking drum brake apparatus as an electric brake apparatus according to the present invention, which is mounted on a rear wheel of an automobile. A backplate 3 as a support member of this electric parking drum brake apparatus 2 is supported by a not-illustrated suspension member, and includes a central hole 4 at the central portion thereof. A rear wheel axle is inserted through the central hole 4. A known main brake mechanism and parking brake mechanism including a brake shoe or the like are arranged on the front side of this backplate 3.

Further, a boss 5 is bulgingly formed on a one-side portion of the rear surface of this backplate 3. This boss 5 includes a support surface 5a and a through-hole 5b. The support surface 5a slopes downward from a ridge line toward the outer peripheral side of the backplate 3. The through-hole 5b is opened to the support surface 5a. A bracket member 7 is fixed to the backplate 3 so as to cover this support surface 5a, and an electric actuator 8 is mounted on this bracket member 7.

An actuator mechanism 9 of the electric actuator 8 includes a motor 10, an output spindle 11, and a transmission mechanism (not illustrated). The output spindle 11 is arranged adjacent to this motor 10 with their respective axes Y2 and Y1 in parallel with each other. The transmission mechanism converts a rotational output of the motor 10 into a thrust force and transmits it to the above-described output spindle 11. An actuator case 12 containing this actuator mechanism 9 includes a cylindrical motor case portion 12a (corresponding to a motor portion of the present invention), a cylindrical output case portion 12b (corresponding to an output spindle portion of the present invention), and a transmission case portion 12c. The motor case portion 12a contains the above-described motor 10. The output case portion 12b is arranged adjacent to this motor case portion 12a, and contains the above-described output spindle 11. The transmission case portion 12c contains the above-described transmission mechanism, and integrally couples a base portion of the above-described motor case portion 12a (a rotational output side of the motor 10) with the above-described output case portion 12b. The motor case portion 12a shares the axis Y1 with the above-described motor 10. Further, the output case portion 12b shares the axis Y2 with the above-described output spindle 11. A connector 17 for supplying power to the motor 10 is provided at the base portion of the motor case portion 12a.

The output case portion 12b is formed so as to have a diameter smaller than the motor case portion 12a. Further, this output case portion 12b includes a large-diameter cylindrical portion 13 and a small-diameter cylindrical portion 14. The large-diameter cylindrical portion 13 protrudes beyond the front surface of the transmission case portion 12c. The small-diameter cylindrical portion 14 is coaxially connected to this large-diameter cylindrical portion 13 via a stepped portion 15, and is smaller in diameter than the large-diameter cylindrical portion 13. The length of this output case portion 12b that protrudes from the front surface of the above-described transmission case portion 12c is shorter than the length of the above-described motor case portion 12a that protrudes from the front surface of the above-described transmission case portion 12c.

A bellows-type dust prevention boot 16 is provided in a tensioned manner between the distal end portion of the above-described small-diameter cylindrical portion 14 and the distal end portion of the above-described output spindle 11 protruding beyond the distal end portion of the small-diameter cylindrical portion 14.

On the other hand, the above-described bracket member 7 is molded using synthetic resin as a whole, and includes a bracket base 7a where a plurality of fixation pieces 18 each fixed to the above-described backplate 3 by a fixation member 19 such as a bolt is arranged on the outer periphery thereof as illustrated in Figs. 1 and 3 to 7. This bracket base 7a includes a cylindrical first containing tube 21 and a cylindrical second containing tube 22 smaller in diameter than the first containing tube 21, which are integrally molded adjacent to and in parallel with each other. This second containing tube 22 is arranged so as to be supported on the support surface 5a of the above-described boss 5.

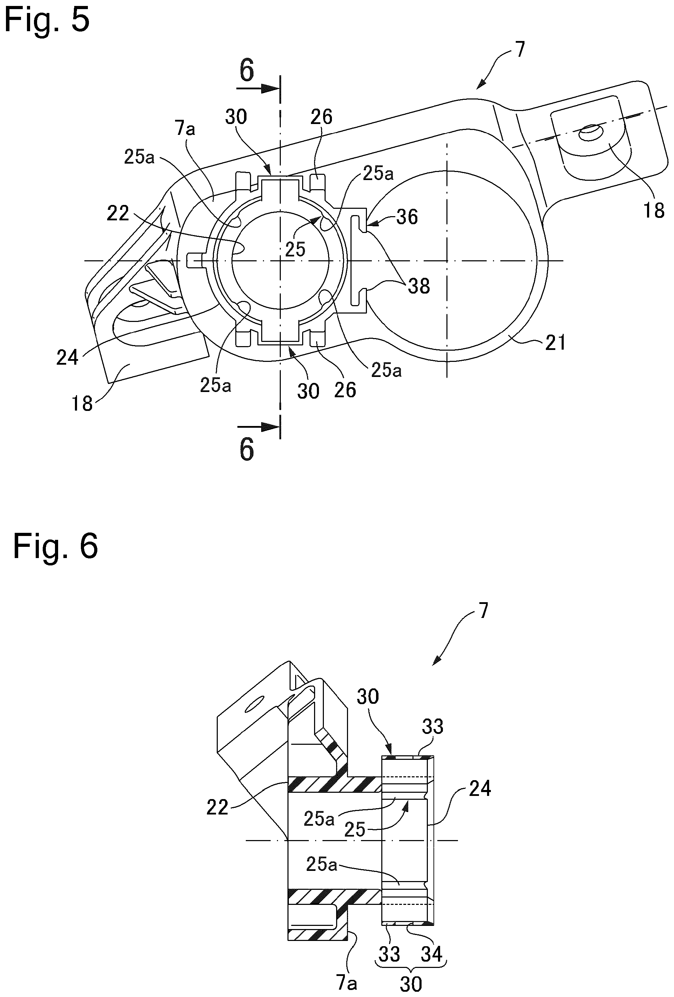

A cylindrical holding tube 24 is provided continuously at the upper end of the above-described second containing tube 22 coaxially and integrally therewith. The holding tube 24 is thinner than the second containing tube 22. A plurality of ribs 25a (refer to Figs. 5 to 7) is formed on the inner peripheral surface of this holding tube 24 so as to be arranged at even intervals in the circumferential direction of the holding tube 24. The plurality of ribs 25a extends in the axial direction of the holding tube 24. These ribs 25a form a press-fit portion 25, to which the above-described output case portion 12b is press-fitted. Further, a plurality of reinforcement ribs 26 is integrally formed on the outer peripheral surface of the holding tube 24. The plurality of reinforcement ribs 26 is erected from the upper surface of the above-described bracket base 7a.

Then, the distal end portion of the above-described motor case portion 12a is inserted in the first containing tube 21. Further, the small-diameter cylindrical portion 14 of the above-described output case portion 12b is press-fitted to the above-described plurality of ribs 25a, i.e., the press-fit portion 25 on the inner peripheral surface of the holding tube 24. A limit on this press-fit is defined by abutment of the stepped portion 15 between the above-described large-diameter cylindrical portion 13 and small-diameter cylindrical portion 14 with the end surface of the holding tube 24.

Now, the plurality of ribs 25a on the inner peripheral surface of the holding tube 24, which forms the press-fit portion 25, is relatively easily elastically deformable, and therefore facilitates setting of a press-fit interference of the above-described small-diameter cylindrical portion 14 and is also effective in avoiding a crack in the holding tube 24 due to this press-fit.

When the small-diameter cylindrical portion 14 is press-fitted to the holding tube 24, the distal end portion of the above-described output spindle 11 protrudes to the front side of the backplate 3 via the second containing tube 22 and the through-hole 5b of the above-described boss 5, and a brake cable (not illustrated) leading to the above-described brake mechanism is connected thereto. This output spindle 11 is configured to be driven so as to be axially advanced/retracted according to a forward/reverse rotation of a rotor of the above-described motor 10 to actuate/release the above-described parking mechanism via the above-described brake cable.

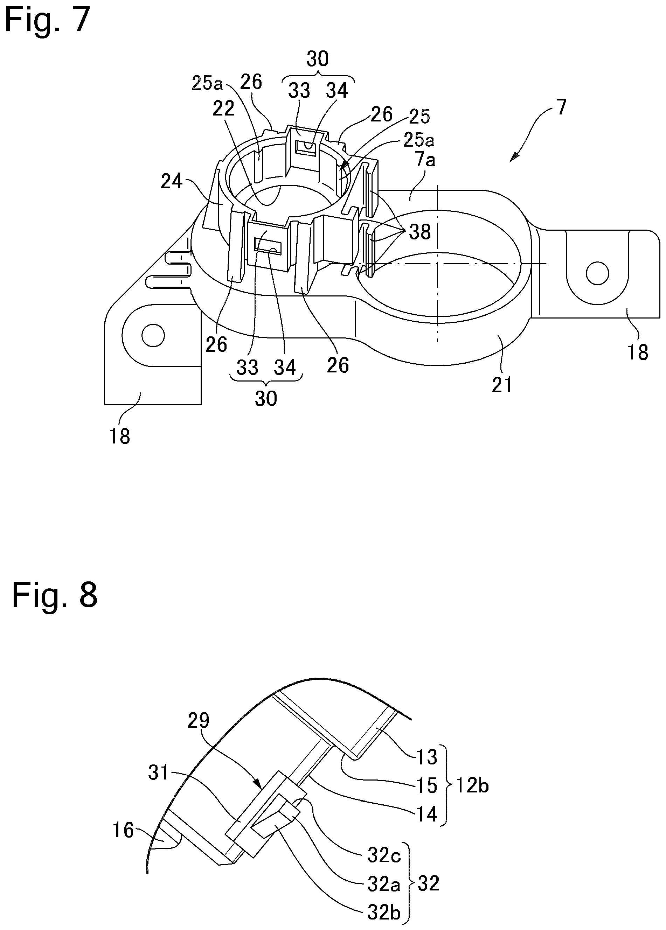

An elastic engagement unit 28 is provided between the small-diameter cylindrical portion 14 of the above-described output case portion 12b and the above-described holding tube 24 including the press-fit portion 25 to which the small-diameter cylindrical portion 14 is press-fitted. The elastic engagement unit 28 locks the press-fit state between the small-diameter cylindrical portion 14 and the press-fit portion 25. This elastic engagement unit 28 includes a plurality of (two in the illustrated example) protruding engagement portions 29 (refer to Fig. 8) and a plurality of recessed engagement portions 30 (refer to Fig. 6). The plurality of protruding engagement portions 29 is formed on the outer periphery of the small-diameter cylindrical portion 14 so as to be arranged at even intervals along the circumferential direction of the small-diameter cylindrical portion 14. The plurality of recessed engagement portions 30 is formed on the holding tube 24, and is elastically engaged with the above-described protruding engagement portions 29 when the small-diameter cylindrical portion 14 is press-fitted to the press-fit portion 25.

More specifically, each of the protruding engagement portions 29 includes a rectangular guide protrusion 31 and an engagement claw 32. The guide protrusion 31 bulges from the outer peripheral surface of the small-diameter cylindrical portion 14. The engagement claw 32 is provided in a protruding manner on the front side of this guide protrusion 31. This engagement claw 32 includes an inclined surface 32b and a vertical surface 32c. The inclined surface 32b slopes down from a top portion 32a toward the distal end side of the small-diameter cylindrical portion 14. The vertical surface 32c extends from the top portion 32a toward the above-described guide protrusion 31.

On the other hand, each of the recessed engagement portions 30 includes a guide wall 33 squared U-shaped in cross section, and an engagement hole 34. The guide wall 33 is formed so as to radially extend a part of the circumferential wall of the above-described holding tube 24. The engagement hole 34 is provided to this guide wall 33. The above-described guide wall 33 is elastically deformable in the radial direction of the holding tube 24 because the holding tube 24 is made from synthetic resin. Especially, the thickness of the guide wall 33 is set to be thinner than the thickness of the holding tube 24 in the illustrated example to facilitate this elastic deformation.

Then, when the small-diameter cylindrical portion 14 is press-fitted to the press-fit portion 25 of the holding tube 24, first, the guide protrusions 31 enter the inner grooves of the guide walls 33, and the inclined surfaces 32b of the engagement claws 32 elastically deform the guide walls 33 radially outward. When the small-diameter cylindrical portion 14 reaches the limit on the press-fit between the small-diameter cylindrical portion 14 and the press-fit portion 25 of the holding tube 24, the engagement claws 32 reach the positions where they are engaged with the engagement holes 34 and the vertical surfaces 32c of the engagement claws 32 face the inner surfaces of the engagement holes 34 due to the restoration from the elastic deformation of the guide walls 33. This state is an elastically engaged state of the elastic engagement unit 28, and the press-fit state between the small-diameter cylindrical portion 14 and the press-fit portion 25 of the holding tube 24 is locked thereby.

Further, a pair of left and right recessed movable rails 37 is formed on the outer surface of the motor case portion 12a. The movable rails 37 are formed in parallel with the axis Y of the motor case portion 12a. A pair of left and right protruding fixed rails 38, to which these movable rails 37 can be engaged, is formed on the outer surface of the above-described holding tube 24. Sliding engagement between these movable and fixed rails 37 and 38 defines the position at which the output case portion 12b is fitted to the holding tube 24, the position at which the motor case portion 12a is contained in the first containing tube 21, and the engageable position of the elastic engagement unit 28, and also prohibits the motor case portion 12a from rotating around the holding tube 24.

In the illustrated example, each of the fixed rails 38 has a break at an intermediate portion thereof, but the length of this break is shorter than the length of the movable rail 37, and therefore the movable rail 37 is prevented from being disengaged from the fixed rail 38. It is apparent that the fixed rail 38 may be formed continuously with no break present over the entire length thereof. These movable and fixed rails 37 and 38 form a holding unit 36 that holds the motor case portion 12a.

Next, the functions of this embodiment will be described.

When the electric actuator 8 is mounted on the bracket member 7, first, the actuator case 12 is pressed toward the bracket member 7 with the movable rails 37 of the motor case portion 12a slidingly engaged with the fixed rails 38 of the bracket member 7. Then, due to the positioning and guide function of these rails 37 and 38, the distal end portion of the motor case portion 12a is inserted into the first containing tube 21 of the bracket member 7, and the small-diameter cylindrical portion 14 of the output case portion 12b is press-fitted to the press-fit portion 25 of the holding tube 24 of the bracket member 7 at the same time. Further, the guide protrusions 31 of the small-diameter cylindrical portion 14 are being engaged with the inner grooves of the guide walls 33 of the holding tube 24, and the inclined surfaces 32b of the engagement claws 32 elastically deform the guide walls 33 radially outward. When the small-diameter cylindrical portion 14 reaches the limit on the press-fit to the press-fit portion 25 of the holding tube 24, the engagement claws 32 reach the positions where they are engaged with the engagement holes 34, and the restoration from the elastic deformation of the guide walls 33 causes the vertical surfaces 32c of the engagement claws 32 to face the inner surfaces of the engagement holes 34, bringing the elastic engagement unit 28 into the elastically engaged state. As a result, the press-fit state between the small-diameter cylindrical portion 14 and the press-fit portion 25 of the holding tube 24, and the insertion state of the motor case portion 12a in the first containing tube 21 are locked.

In this manner, the electric actuator 8 can be easily joined to the bracket member 7 by placing the elastic engagement unit 28 into the elastically engaged state with a linear single operation of moving the actuator case 12 to the bracket member 7 side according to the guide function of the fixed rails 38 and the movable rails 37 extending in the axial direction of the motor case portion 12a, and the assemblability thereof is extremely excellent.

In addition, with the electric actuator 8 joined to the bracket member 7, at least a part of the motor case portion 12a is contained in the first containing tube 21 of the bracket member 7, and therefore the electric actuator 8 can be less exposed to outside the bracket member 7 and the electric brake apparatus can be reduced in size.

Further, the movable and fixed rails 37 and 38 forming the above-described holding unit 36 can exert a great reaction force against a rotational moment of the motor case portion 12a around the holding tube 24 with the holding tube 24 and the output case portion 12b joined to each other by the above-described elastic engagement unit 28, and this can effectively suppress a swinging motion of the motor case portion 12a containing the motor 10 relatively heavy in weight around the holding tube 24 when the vehicle vibrates, thereby ensuring the durability of the actuator case 12 and also reducing a load imposed on the elastic engagement unit 28 to enhance even the durability of the elastic engagement unit 28.

In this case, laying the movable and fixed rails 37 and 38 on at least the distal end portion side of the motor case portion 12a can contribute to further effectively suppressing a swinging motion of the motor case portion 12a.

Further, the above-described slidingly engaged movable and fixed rails 37 and 38 exert even a function of precisely and accurately defining the position at which the output case portion 12a is fitted to the holding tube 24, which leads to contribution to further excellent assemblability.

Further, the above-described elastic engagement unit 28 is constituted by the engagement claws 32 of the output case portion 12b and the engagement holes 34 of the holding tube 24, and is also formed elastically deformably in the portions thereof surrounding the engagement holes 34 so as to permit the engagement between them. Therefore, this elastic engagement unit 28 can be simply configured.

Further, the bracket member 7 can be reduced in weight by being made from synthetic resin, and also can be effectively reinforced by being provided with the above-described first and second containing tubes 21 and 22 integrally molded therewith.

Further, press-fitting the output case portion 12b to the press-fit portion 25 of the holding tube 24 can enhance the joining strength between the output case portion 12b and the holding tube 24 to ease a load borne by the above-described elastic engagement unit 28 in a direction for extracting the output case portion 12b, thereby achieving the improvement of the durability thereof.

Having described an embodiment of the present invention, the present invention is not limited to the above-described embodiment and can be subjected to various design modifications made without departing from the present invention recited in the claims.

For example, the above-described elastic engagement unit 28 can be modified in such a manner that the engagement claw 32 and the engagement hole 34 are provided to the holding tube 24 and the output case portion 12b, respectively, in an opposite manner from the above-described embodiment. Further, the motor case portion 12a can be press-fitted to the first containing tube 21 of the bracket member, and an elastic engagement unit can also be interposed between them. Further, the protruding rail 37 and the recessed rail 38 forming the holding unit 36 can be formed on the bracket member 7 and the first containing tube 21, respectively, in an opposite manner from the embodiment. Further, the present invention is also applicable to an electric brake apparatus including an electric actuator, such as an electric parking disk brake apparatus.

### REFERENCE SIGNS LIST

- 2: electric brake apparatus (electric parking drum brake apparatus)
- 3: support member (backplate)
- 7: bracket member
- 8: electric actuator
- 9: actuator mechanism
- 12a: motor portion (motor case portion)
- 12b: output spindle portion (output case portion)
- 12c: transmission case portion
- 21: containing tube (first containing tube)
- 24: holding tube
- 25: press-fit portion
- 28: elastic engagement unit
- 29: protruding engagement portion
- 30: recessed engagement portion
- 36: holding unit
- 37: movable rail
- Y1: axis of motor portion (motor case portion)
- Y2: axis of output spindle portion (output case portion)

## Claims

1. An electric brake apparatus comprising:
a bracket member (7) fixed to a support member (3) of a brake mechanism; and
an electric actuator (8) joined to the bracket member (7) and operable to actuate the brake mechanism,
wherein the electric actuator (8) includes a motor portion (12a),
wherein the electric actuator (8) includes an output spindle portion (12b) arranged in such a manner that axes of the motor portion (12a) and the output spindle portion (12b) extend in parallel with each other, and
wherein by inserting the electric actuator (8) into the bracket member (7) along an axial direction of the motor portion (12a),
the electric actuator (8) is engaged with the bracket member (7),
the output spindle portion (12b) is fitted to a holding tube (24) provided to the bracket member (7) and the output spindle portion (12b) is engaged with the holding tube (24),
wherein a holding unit (36) configured to hold the motor portion (12a) is provided to the bracket member (7), the electric brake apparatus being **characterized in that** the holding unit (36) has a rail structure.

2. The electric brake apparatus according to claim 1, wherein the holding unit (36) is disposed on a distal end side of the motor portion (12a).

3. The electric brake apparatus according to claim 1 or 2, wherein an elastic engagement unit (28) is provided between the bracket member (7) and the electric actuator (8),
wherein the elastic engagement unit (28) includes
a protruding engagement portion (29) provided on one of the bracket member (7) and the electric actuator (8) and
a recessed engagement portion (30) provided on the other of the bracket member (7) and the electric actuator (8), and
wherein first and second engagement portions (29 and 30) are engaged with each other with the aid of elastic deformation of one of the first and second engagement portions (29 and 30).

4. The electric brake apparatus according to claim 1, wherein the holding tube (24) includes a press-fit portion (25) to which the output spindle portion (12b) is press-fitted.

5. The electric brake apparatus according to any one of claims 1 to 4, wherein the bracket member (7) is made from synthetic resin, and a containing tube (21) configured to contain the motor portion (12a) is molded integrally with the bracket member (7).

## Patentansprüche

1. Elektrische Bremseinrichtung, umfassend:
ein Halterungselement (7), das an einem Trägerelement (3) eines Bremsmechanismus befestigt ist; und
einen elektrischen Aktuator (8), der mit dem Halterungselement (7) verbunden und betriebsfähig ist, den Bremsmechanismus zu betätigen,
wobei der elektrische Aktuator (8) einen Motorabschnitt (12a) einschließt,
wobei der elektrische Aktuator (8) einen Ausgangsspindelabschnitt (12b) einschließt, der derart angeordnet ist, dass Achsen des Motorabschnitts (12a) und des Ausgangsspindelabschnitts (12b) sich parallel zueinander erstrecken, und
wobei durch Einsetzen des elektrischen Aktuators (8) in das Halterungselement (7) entlang einer axialen Richtung des Motorabschnitts (12a),
der elektrische Aktuator (8) mit dem Halterungselement (7) in Eingriff steht,
der Ausgangsspindelabschnitt (12b) in ein an dem Halterungselement (7) vorgesehenes Halterohr (24) eingepasst ist und der Ausgangsspindelabschnitt (12b) mit dem Halterohr (24) in Eingriff steht, wobei an dem Halterungselement (7) eine Halteeinheit (36) vorgesehen ist, die dazu ausgebildet ist, den Motorabschnitt (12a) zu halten, wobei die elektrische Bremseinrichtung **dadurch gekennzeichnet ist, dass** die Halteeinheit (36) eine Schienenstruktur aufweist.

2. Elektrische Bremseinrichtung nach Anspruch 1, wobei die Halteeinheit (36) an einer distalen Endseite des Motorabschnitts (12a) angeordnet ist.

3. Elektrische Bremseinrichtung nach Anspruch 1 oder 2, wobei zwischen dem Halterungselement (7) und dem elektrischen Aktuator (8) eine elastische Eingriffseinheit (28) vorgesehen ist,
wobei die elastische Eingriffseinheit (28) Folgendes einschließt
einen vorspringenden Eingriffsabschnitt (29), der an einem von dem Halterungselement (7) und dem elektrischen Aktuator (8) vorgesehen ist, und
einen vertieften Eingriffsabschnitt (30), der an dem anderen von dem Halterungselement (7) und dem elektrischen Aktuator (8) vorgesehen ist, und
wobei der erste und der zweite Eingriffsabschnitt (29 und 30) mit Hilfe einer elastischen Verformung eines von dem ersten und dem zweiten Eingriffsabschnitt (29 und 30) miteinander in Eingriff stehen.

4. Elektrische Bremseinrichtung nach Anspruch 1, wobei das Halterohr (24) einen Einpressabschnitt (25) einschließt, in den der Ausgangsspindelabschnitt (12b) eingepresst ist.

5. Elektrische Bremseinrichtung nach einem der Ansprüche 1 bis 4, wobei das Halterungselement (7) aus Kunstharz hergestellt ist, und ein Aufnahmerohr (21), das dazu ausgebildet ist, den Motorabschnitt (12a) aufzunehmen, einstückig mit dem Halterungselement (7) geformt ist.

## Revendications

1. Appareil de frein électrique comprenant :
un élément (7) de support fixé à un élément (3) d'appui d'un mécanisme de frein ; et
un actionneur (8) électrique relié à l'élément (7) de support et fonctionnel pour actionner le mécanisme de frein,
dans lequel l'actionneur (8) électrique inclut une partie (12a) moteur,
dans lequel l'actionneur (8) électrique inclut une partie (12b) broche de sortie agencée de telle manière que des axes de la partie (12a) moteur et de la partie (12b) broche de sortie s'étendent en parallèle l'un avec l'autre, et
dans lequel, en insérant l'actionneur (8) électrique dans l'élément (7) de support le long d'une direction axiale de la partie (12a) moteur,
l'actionneur (8) électrique est en prise avec l'élément (7) de support,
la partie (12b) broche de sortie est ajustée sur un tube (24) de maintien prévu sur l'élément (7) de support et la partie (12b) broche de sortie est en prise avec le tube (24) de maintien, dans lequel une unité (36) de maintien configurée pour maintenir la partie (12a) moteur est prévue sur l'élément (7) de support, l'appareil de frein électrique étant **caractérisé en ce que** l'unité (36) de maintien présente une structure à rails.

2. Appareil de frein électrique selon la revendication 1, dans lequel l'unité (36) de maintien est disposée sur un côté d'extrémité distale de la partie (12a) moteur.

3. Appareil de frein électrique selon la revendication 1 ou la revendication 2, dans lequel une unité (28) de mise en prise est prévue entre l'élément (7) de support et l'actionneur (8) électrique,
dans lequel l'unité (28) de mise en prise inclut
une partie (29) de mise en prise saillante prévue sur l'un de l'élément (7) de support et de l'actionneur (8) électrique et
une partie (30) de mise en prise renfoncée prévue sur l'autre de l'élément (7) de support et de l'actionneur (8) électrique, et
dans lequel les première et deuxième parties (29 et 30) de mise en prise sont en prise l'une avec l'autre à l'aide de la déformation élastique de l'une des première et deuxième parties (29 et 30) de mise en prise.

4. Appareil de frein électrique selon la revendication 1, dans lequel le tube (24) de maintien inclut une partie (25) d'ajustement par pression sur laquelle la partie (12b) broche de sortie est ajustée par pression.

5. Appareil de frein électrique selon l'une quelconque des revendications 1 à 4, dans lequel l'élément (7) de support est fabriqué à partir d'une résine synthétique, et un tube (21) de logement configuré pour loger la partie (12a) moteur est moulé d'un seul tenant avec l'élément (7) de support.
